# EUROPEAN PATENT SPECIFICATION

(11) **EP 2 772 658 B1**
(45) Date of publication and mention of the grant of the patent: **20.03.2019**
(21) Application number: 12842996.6
(22) Date of filing: 23.10.2012
(51) Int. Cl.: F16D 13/75

(54) **CLUTCH DEVICE**
KUPPLUNGSVORRICHTUNG
DISPOSITIF D'EMBRAYAGE

(30) Priority: 27.10.2011 JP 2011235695
(43) Date of publication of application: 03.09.2014
(73) Proprietor: Aisin Seiki Kabushiki Kaisha, Aichi 448-8650 (JP)
(72) Inventor: YAMASAKI, Shoichi, Kariya-shi Aichi 448-8650 (JP); KIDA, Tokiyoshi, Kariya-shi Aichi 448-8650 (JP); IMAI, Hiroshi, Kariya-shi Aichi 448-8650 (JP)
(74) Representative: Kramer Barske Schmidtchen Patentanwälte PartG mbB
(86) International application number: PCT/JP2012/077351
(87) International publication number: WO 2013/061959

(56) References cited:
- DE-A1- 10 016 189
- DE-C2- 4 092 382
- JP-A- H06 257 623
- JP-A- H07 317 803
- JP-A- H09 126 243
- JP-A- H09 291 948
- JP-U- H02 124 326
- JP-U- H04 105 637
- US-A- 4 924 991

## Description

### [TECHNICAL FIELD]

This invention relates to a clutch apparatus having a mechanism that compensates for wear caused to friction materials for a clutch disk due to abrasion.

### [BACKGROUND]

The present application claims priority based on JP Patent Application 2011-235695 filed in Japan on October 27, 2011.

In an automotive vehicle, a clutch apparatus is provided on a path of motive power transmission between an engine and a transmission in order not to transmit the rotational motive power of an engine to the transmission system during engine starting or speed change. In the clutch apparatus, the clutch actuating power is transmitted by a manual operation, such as actuation by hand or foot, of an actuation mechanism, such as a clutch lever or a clutch pedal, via a release mechanism, such as a hydraulic or a link system, in order to enable the engine and the transmission to be connected to or disconnected from each other at will. In general, the clutch apparatus includes a mechanism by which a clutch disk, adapted to transmit the rotational motive power to the transmission, is thrust by a pressure plate onto a flywheel to which the rotational motive power is transmitted from the engine. The pressure plate is biased towards the clutch disk by a diaphragm spring which may be actuated by the release mechanism and which is pivotally supported at a fulcrum point by a clutch cover fastened to the flywheel.

In the clutch apparatus, the diaphragm spring has its position or attitude changed with wear caused to a friction material (facing) provided on a friction surface of the clutch disk. If the friction material is worn due to abrasion, power of actuation, necessary to set the clutch apparatus to its disengaged state, that is, load to be applied to the clutch cover, is increased. There is thus such a clutch apparatus configured to compensate for wear caused to the friction material.

In a clutch cover assembly, disclosed in, for example, Patent Document 1, first and second fulcrum springs are arranged between a pressure plate and a diaphragm spring. A slanted surface section is formed on a surface of each fulcrum ring, directed to the pressure plate, and first and second slide keys, biased radially outwards, are arranged between the slanted surface section of each fulcrum ring and the pressure plate. If, as a facing is worn due to abrasion and the pressure plate is moved from an initial position towards the flywheel, the first fulcrum ring on an inner side is opened. The second fulcrum ring is opened when the clutch is released. These operations are iterated so as to fill a gap between the diaphragm spring and the pressure plate produced as a result of wear caused to the facing.

DE 100 16 189 A1 discloses an automotive clutch comprising a wear compensation device.

### [Citations List]

### [Patent Document]

Patent Document 1: Japanese Patent Publication H5-59283

### [SUMMARY]

### [Technical Problem]

The following analysis is given in accordance with the present invention.

The following analysis is given from the standpoint of the present invention.

In the clutch cover assembly, as disclosed in Patent Document 1, in which components (slide keys and fulcrum rings) are arranged in tandem in an axial direction between the pressure plate and the diaphragm spring, however, the axial dimension is increased. Moreover, in the clutch cover assembly, disclosed in Patent Document 1, the first and second slide keys are shifted radially outwards under a centrifugal force. This may fill the gap between the diaphragm spring and the pressure plate to an extent more than is necessary, thus possibly causing malfunctions. In addition, in the clutch cover assembly, as disclosed in Patent Document 1, there is fear that the number of components increases, thus raising the cost.

It is a principal object of the present invention to provide a clutch apparatus in which it is possible to prevent malfunctions ascribable to the centrifugal force while the size and the cost are suppressed from increasing.

### [Solution of the Problem]

The above object is achieved by a clutch apparatus according to claim 1. Further developments are given in the dependent claims.

### [Advantageous Effect of the Invention]

According to the present invention, in which adjustment of lengths in the axial direction is made based on movement in the circumferential direction of the first or second adjustment member relative to the third adjustment member, it is possible to prevent malfunctions ascribable to the centrifugal force. Moreover, in the wear adjustment mechanism, in which length adjustment is by exploiting the engagement between the third adjustment member and the first or second adjustment member, there is no necessity to provide any other member between the third adjustment member and the first or second adjustment member. Hence, an axial dimension of the clutch cover as well as the number of components and hence the cost may be reduced.

### [BRIEF DESCRIPTION OF THE DRAWINGS]

Fig.1 is an axial cross-sectional view schematically showing a portion along line X-X' of Fig.2 of a clutch apparatus of a formulation according to Example 1 of the present invention,
Fig.2 is a plan view schematically showing a formulation of a pressure plate in the clutch apparatus according to Example 1 of the present invention, looking from the back side,
Fig.3 is an axial partial cross-sectional view schematically showing a formulation of the clutch apparatus according to Example 1 of the present invention, and showing a portion of a wear adjustment mechanism of Fig.1 with its vicinity in an enlarged scale,
Fig.4(A) and Fig.4(B) schematically illustrate the clutch apparatus according to Example 1 of the present invention; Fig.4(A) is a circumferential partial cross-sectional view showing a portion of the apparatus along line Y-Y' of Fig.3;
Fig.4(B) being a circumferential partial cross-sectional view showing its another portion along line Z-Z'of Fig.3,
Fig.5(A), Fig.5(B) and Fig.5(C) illustrate the operation of the clutch apparatus according to Example 1 of the present invention in its initial state; Fig.5(A) is an axial partial cross-sectional view showing a portion of the apparatus along line X-X' of Fig.2, Fig.5(B) being a circumferential partial cross-sectional view showing its another portion along line Y-Y' of Fig.3, and Fig.5(C) being a circumferential partial cross-sectional view showing its still another portion along line Z-Z' of Fig.3,
Fig.6(A), Fig.6(B) and Fig.6(C) illustrate the operation of the clutch apparatus according to Example 1 of the present invention in a state when the friction material has become worn due to abrasion; Fig.6(A) is an axial partial cross-sectional view showing a portion of the apparatus along line X-X' of Fig.2,
Fig.6(B) being a circumferential partial cross-sectional view showing its another portion along line Y-Y' of Fig.3, and Fig.6(C) being a circumferential partial cross-sectional view showing its still another portion along line Z-Z' of Fig.3,
Fig.7(A), Fig.7(B) and Fig.7(C) illustrate the operation of the clutch apparatus according to Example 1 of the present invention in a state when the inner wedge ring has come in operation; Fig.7(A) is an axial partial cross-sectional view showing a portion of the apparatus along line X-X' of Fig.2, Fig.7(B) being a circumferential partial cross-sectional view showing its another portion along line Y-Y' of Fig.3, and Fig.7(C) being a circumferential partial cross-sectional view showing its still another portion along line Z-Z' of Fig.3,
Fig.8(A), Fig.8(B) and Fig.8(C) illustrate the operation of the clutch apparatus according to Example 1 of the present invention in a clutch disengaged state;

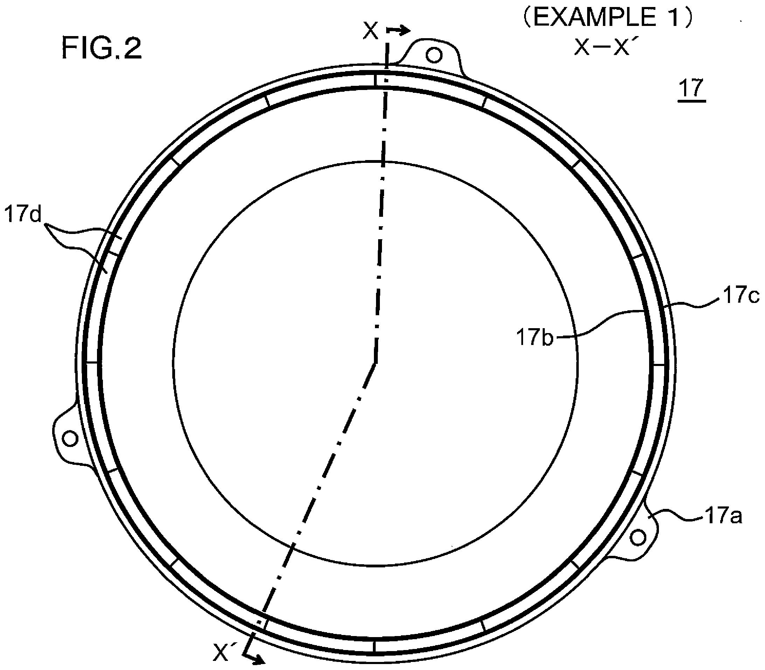

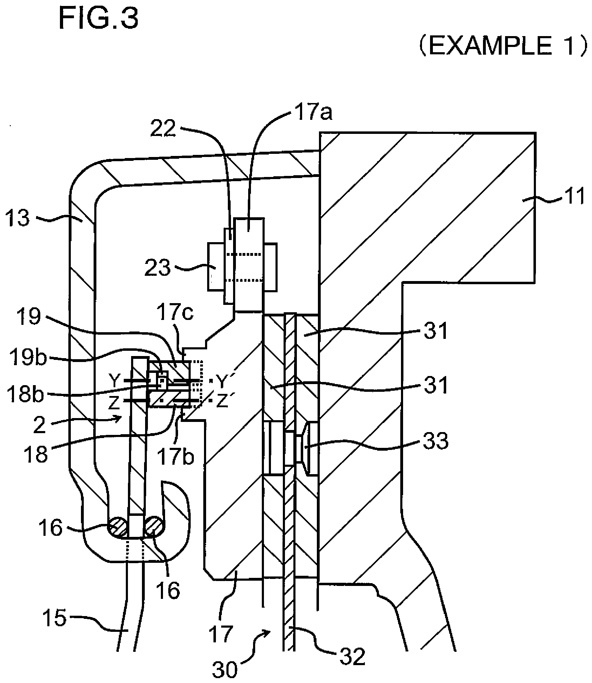

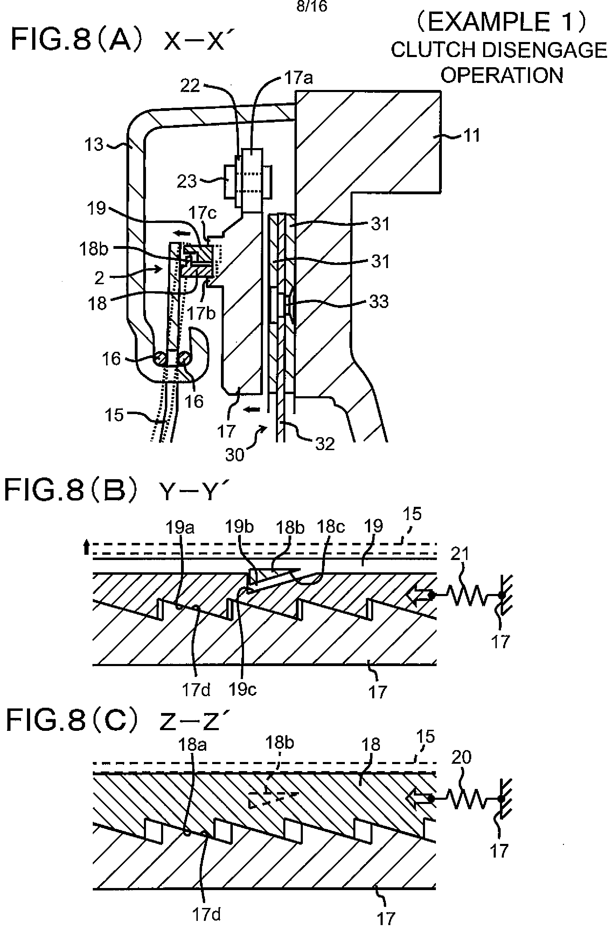

Fig.8(A) is an axial partial cross-sectional view showing a portion of the apparatus along line X-X' of Fig.2, Fig.8(B) being a circumferential partial cross-sectional view showing its another portion along line Y-Y' of Fig.3, and
Fig.8(C) being a circumferential partial cross-sectional view showing its still another portion along line Z-Z' of Fig.3,

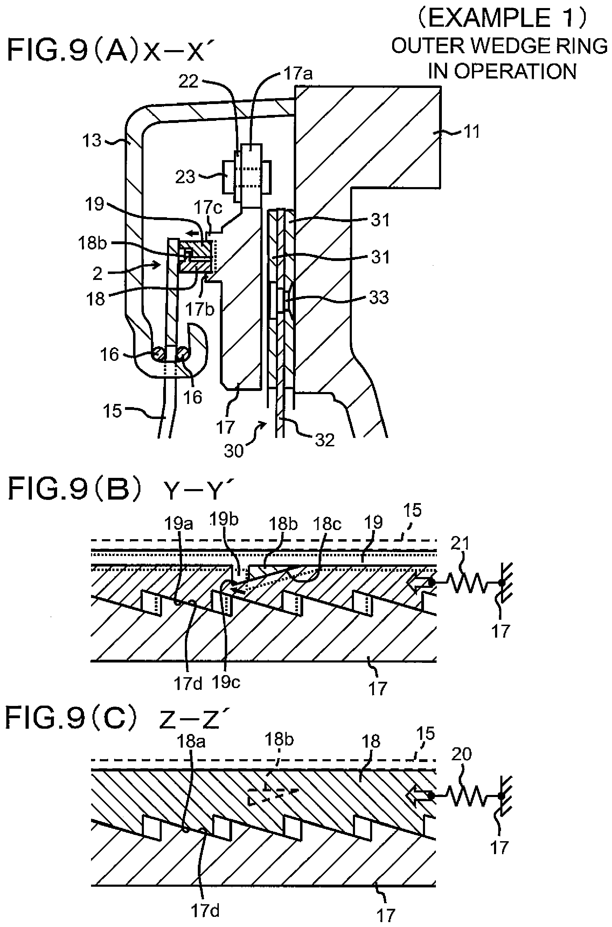

Fig.9(A), Fig.9(B) and Fig.9(C) illustrate the operation of the clutch apparatus according to Example 1 of the present invention in a state when the outer wedge ring has come in operation; Fig.9(A) is an axial partial cross-sectional view showing a portion of the apparatus along line X-X' of Fig.2, Fig.9(B) being a circumferential partial cross-sectional view showing its another portion along line Y-Y' of Fig.3, and Fig.9(C) being a circumferential partial cross-sectional view showing its still another portion along line Z-Z' of Fig.3,

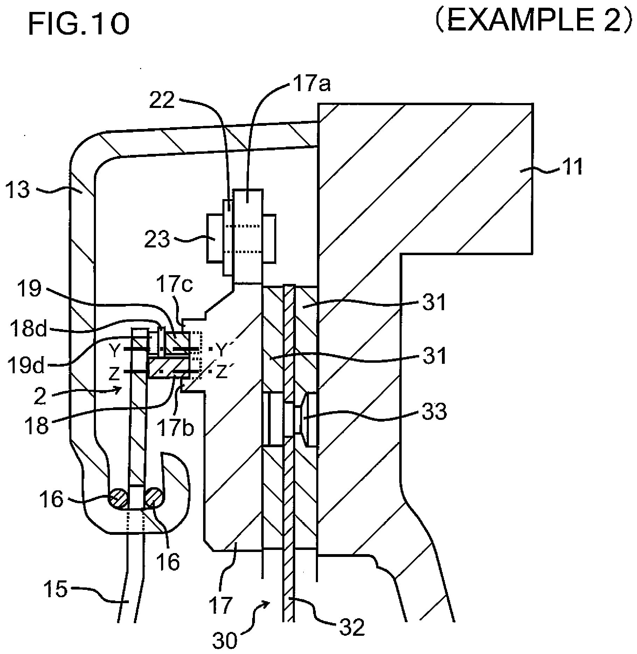

Fig.10 is an axial partial cross-sectional view schematically showing a formulation of a clutch apparatus according to Example 2 and showing its wear adjustment mechanism with its vicinity in an enlarged scale,

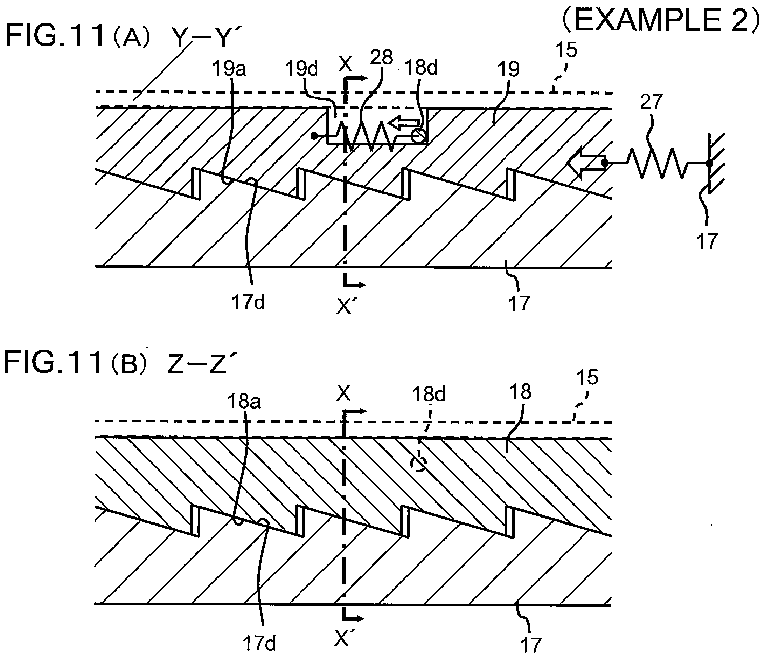

Fig.11(A) and Fig.11(B) schematically illustrate a formulation of a clutch apparatus according to Example 2 Fig.11(A) is a circumferential partial cross-sectional view showing a portion of the apparatus along line Y-Y' of Fig.10; Fig.11(B) being a circumferential partial cross-sectional view showing its another portion along line Z-Z' of Fig.10,

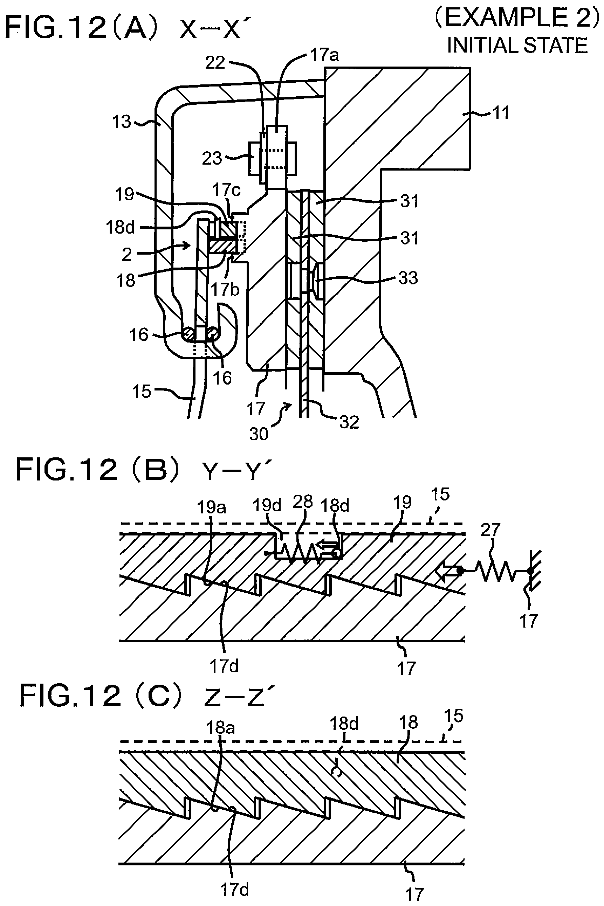

Fig.12(A), Fig.12(B) and Fig.12(C) illustrate the operation of the clutch apparatus according to Example 2 in its initial state;
Fig.12(A) is an axial partial cross-sectional view, Fig.12(B) being a circumferential partial cross-sectional view showing a portion of the apparatus along line Y-Y' of Fig.10, and Fig.12(C) being a circumferential partial cross-sectional view showing its another portion along line Z-Z' of Fig.10,

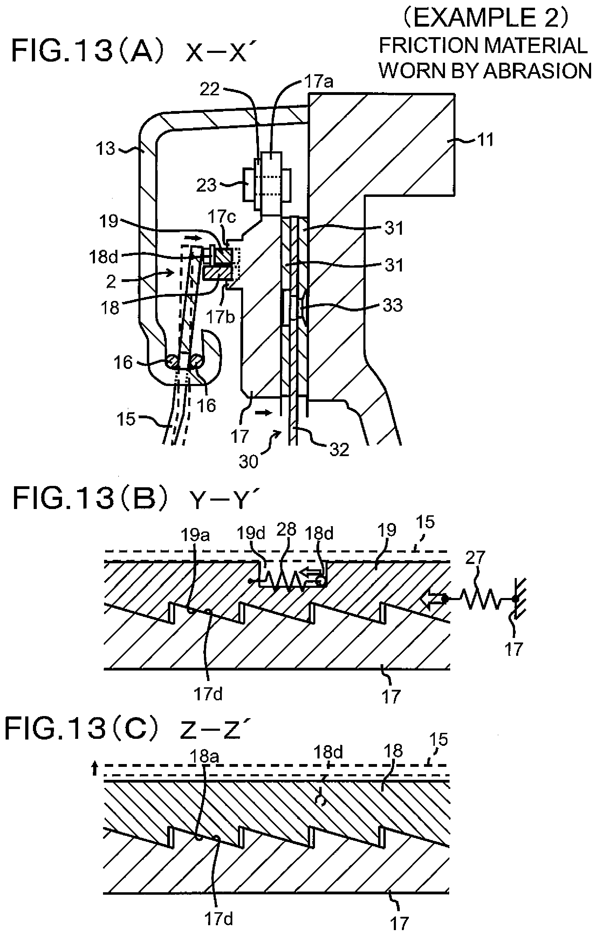

Fig.13(A), Fig.13(B) and Fig.13(C) illustrate the operation of the clutch apparatus according to Example 2 in a state when the friction material has become worn due to abrasion; Fig.13(A) is an axial partial cross-sectional view, Fig.13(B) being a circumferential partial cross-sectional view showing a portion of the apparatus along line Y-Y' of Fig.10, and Fig.13(C) being a circumferential partial cross-sectional view showing its another portion along line Z-Z' of Fig.10,

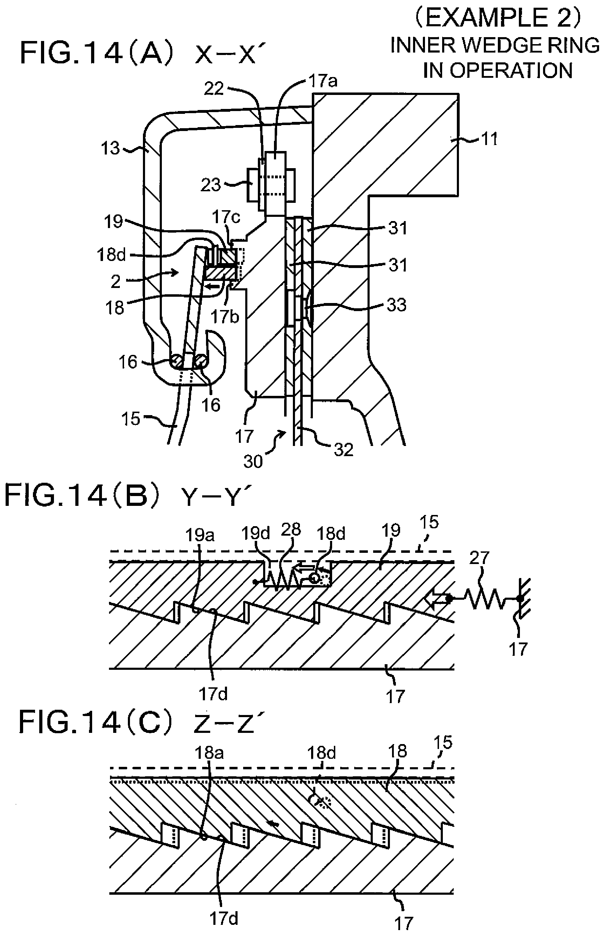

Fig.14(A), Fig.14(B) and Fig.14(C) illustrate the operation of the clutch apparatus according to Example 2 in a state when the inner wedge ring has come in operation; Fig.14(A) is an axial partial cross-sectional view, Fig.14(B) being a circumferential partial cross-sectional view showing a portion of the apparatus along line Y-Y' of Fig.10, and Fig.14(C) being a circumferential partial cross-sectional view showing its another portion along line Z-Z' of Fig.10,

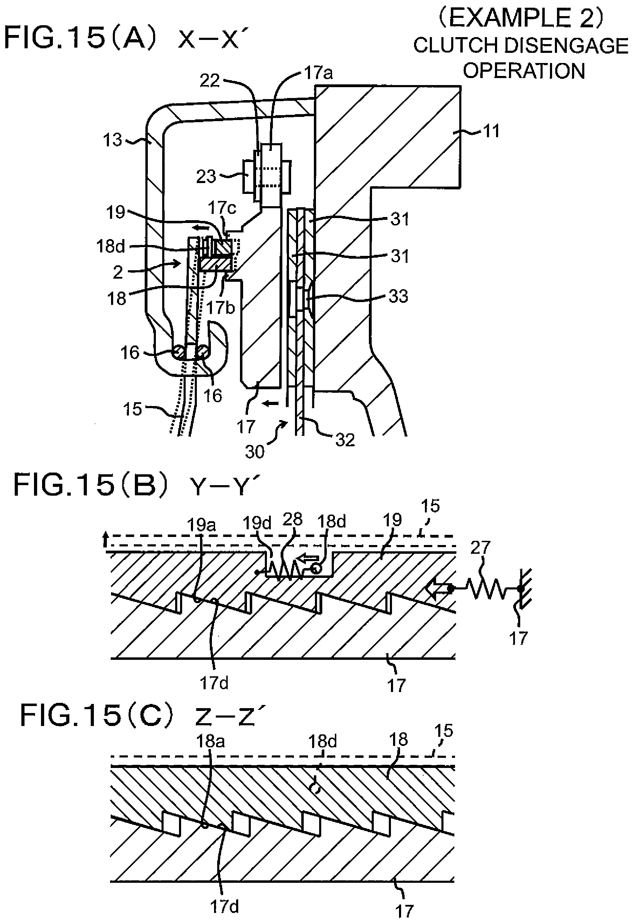

Fig.15(A), Fig.15(B) and Fig.15(C) illustrate the operation of the clutch apparatus according to Example 2 in a clutch disengaged state; Fig.15 (A) is an axial partial cross-sectional view, Fig.15(B) being a circumferential partial cross-sectional view showing a portion of the apparatus along line Y-Y' of Fig.10 and Fig.15(C) being a circumferential partial cross-sectional view showing its another portion along line Z-Z' of Fig.10, and

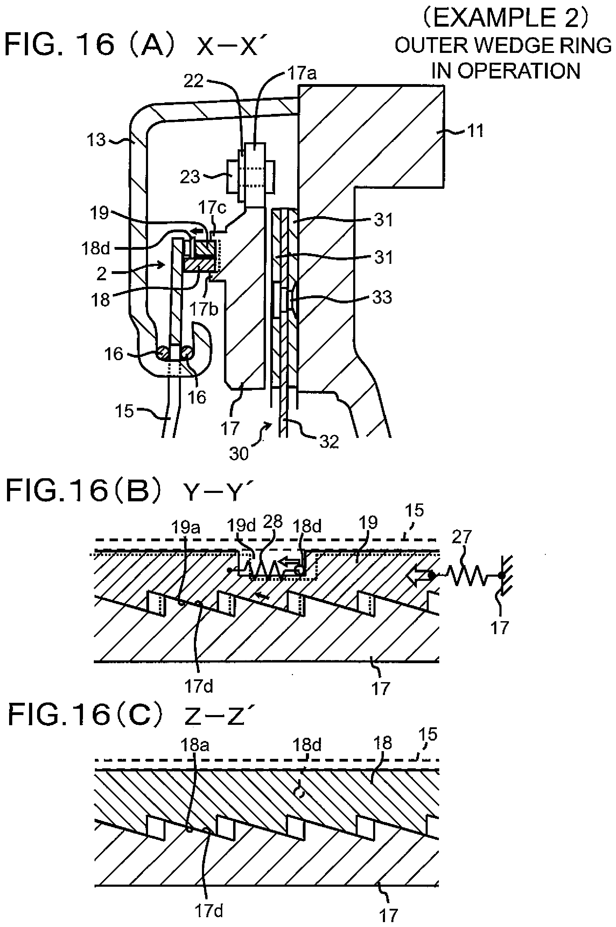

Fig.16(A), Fig.16(B) and Fig.16(C) illustrate the operation of the clutch apparatus according to Example 2 in a state when the outer wedge ring has come in operation; Fig.16(A) is an axial partial cross-sectional view, Fig.16(B) being a circumferential partial cross-sectional view showing a portion of the apparatus along line Y-Y' of Fig.10, and Fig.16(C) being a circumferential partial cross-sectional view showing its another portion along line Z-Z' of Fig.10.

### [Modes for Carrying out the Invention]

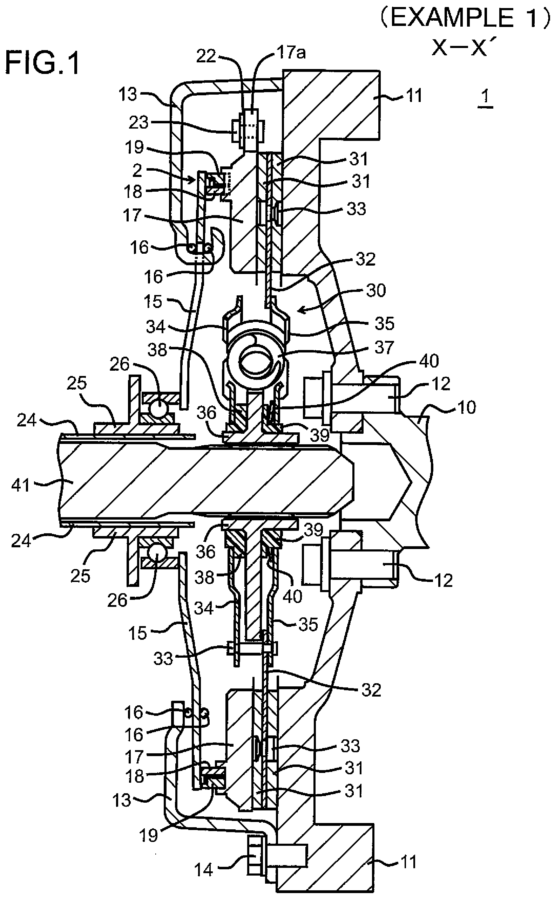

A clutch apparatus in a mode of the present invention includes a wear adjustment mechanism (2 of Fig.1). The wear adjustment mechanism comprises a first adjustment member (18 of Fig.1) acted on by a lever member (15 of Fig.1) pivotally supported by a clutch cover (13 of Fig.1), a second adjustment member (19 of Fig.1) disposed more radially outwardly than the first adjustment member and acted on by the lever member, and a third adjustment member (17 of Fig.1) acted on by the lever member via the first adjustment member or the second adjustment member. The first adjustment member or the second adjustment member performs a relative movement in one of the circumferential directions with respect to the third adjustment member so as to adjust a length from the third adjustment member to an abutting portion between the lever member and the first adjustment member or from the third adjustment member to an abutment portion between the lever member and the second adjustment member.

In the above mentioned clutch apparatus according to the present invention, the third adjustment member is preferably a pressure plate that thrusts the clutch disk onto a flywheel.

In the above mentioned clutch apparatus according to the present invention, the lever member is preferably a diaphragm spring capable of biasing the third adjustment member via the first adjustment member or the second adjustment member in an axial direction.

In the above mentioned clutch apparatus according to the present invention, the wear adjustment mechanism preferably exploits engagement between an abutting surface [on a sloped surface section] of the first or second adjustment member and an abutting surface [on a sloped surface section] of the third adjustment member mating with the abutting surface of the first or second adjustment member, in which the engagement is such a one in which displacement of one of the sloped surface sections in one of the circumferential directions produces displacement of the other sloped surface section in one of the axial directions at the same time.

In the above mentioned clutch apparatus according to the present invention, the wear adjustment mechanism preferably exploits thread-like engagement between an abutting surface of the first or second adjustment member and an abutting surface of the third adjustment member mating with the abutting surface of the first or second adjustment member.

In the above mentioned clutch apparatus according to the present invention, the wear adjustment mechanism preferably further comprises a first elastic member that biases the first adjustment member in one of the circumferential directions relative to the third adjustment member, and a second elastic member that biases the second adjustment member in one of the circumferential directions relative to the third adjustment member.

In the clutch apparatus according to the present invention, the wear adjustment mechanism preferably further comprises a first elastic member that biases the first adjustment member in one of the circumferential directions relative to the second adjustment member, and a second elastic member that biases the second adjustment member in one of the circumferential directions relative to the third adjustment member. The biasing force of the first elastic member is preferably smaller than that of the second elastic member.

In the above mentioned clutch apparatus according to the present invention, the wear adjustment mechanism preferably operates in such a manner that, if, in a clutch engaged state, the second adjustment member is abutted onto the lever member, and a gap is produced between the first adjustment member and the lever member, the first adjustment member is rotated in one of the circumferential directions relative to the third adjustment member so that the first adjustment member is abutted onto the lever member; and that, if, in a clutch disengaged state, the first adjustment member is abutted onto the lever member, and a gap is produced between the second adjustment member and the lever member, the second adjustment member is rotated in one of the circumferential directions relative to the third adjustment member so that the second adjustment member is abutted onto the lever member.

In the above mentioned clutch apparatus according to the present invention, the second adjustment member has a recessed part. The first adjustment member includes a stopper portion protruded radially outwards therefrom so as to be intruded into the recessed part. When abutted onto the recessed part, the stopper portion restricts rotation of the second adjustment member relative to the first adjustment member.

In the above mentioned clutch apparatus according to the present invention, the recessed part and the stopper portion include a sloped surface section, respectively on an abutting surface abutting against each other at the time of the restricting. Each sloped surface section has a slope such that a displacement along the slope in one of the circumferential directions produces a displacement in the other [sic. one] of the axial directions at the same time.

It is noted that symbols for reference to the drawings, if appended in the present application, are so appended merely to assist in understanding and the invention is not to be limited to the modes illustrated.

### Example 1

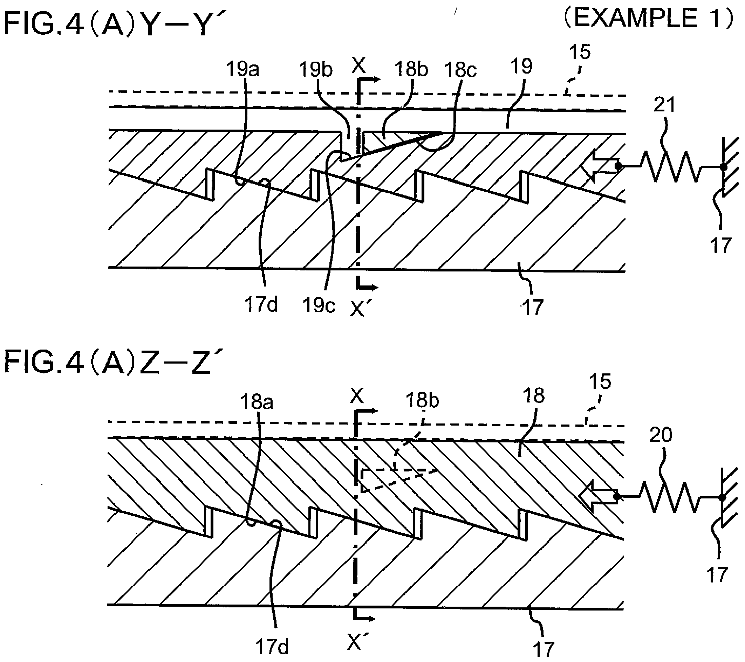

A clutch apparatus according to Example 1 of the present invention will now be described with reference to the drawings. Fig.1 is an axial cross-sectional view schematically showing a portion along line X-X' of Fig.2 of a clutch apparatus of a formulation according to Example 1 of the present invention. Fig.2 is a plan view schematically showing a formulation of a pressure plate in the clutch apparatus according to Example 1 of the present invention, looking from the back side. Fig.3 is an axial cross-sectional view schematically showing the formulation of the clutch apparatus according to Example 1 of the present invention, and showing a portion of a wear adjustment mechanism of Fig.1 as well as its vicinity to an enlarged scale. Fig.4(A) and Fig.4(B) schematically illustrate the formulation of the clutch apparatus according to Example 1 of the present invention, where Fig.4(A) is a circumferential partial cross-sectional view showing a portion of the apparatus along line Y-Y' of Fig.3, and Fig.4(B) is a circumferential partial cross-sectional view showing its another portion along line Z-Z' of Fig.3.

A clutch apparatus 1 is such an apparatus that transmits the power of rotation from a crankshaft 10 of an engine, not shown, to an input shaft 41 of a transmission so that connection of the power of rotation can be turned on or off at will (see Fig.1). The clutch apparatus 1 can be actuated by a release device, such as for example a lever system, a hydraulic piston mechanism or the like, which causes a release bearing 26 to be moved towards the engine in an axial direction (towards right in Fig.1) to turn off rotary power connection from the crankshaft 10 to the input shaft 41 of the transmission system. The clutch apparatus 1 includes a wear adjustment mechanism 2 which compensates for wear caused due to abrasion to a friction material 31 provided on a friction surface of a clutch disk 30.

The wear adjustment mechanism 2 is such a mechanism which adjusts lengths from a pressure plate 17 to an abutting portion between a diaphragm spring 15 and an inner wedge ring 18 and from the pressure plate to an abutting portion between the diaphragm spring and an outer wedge ring 19 (see Fig.3 and Fig.4). In the wear adjustment mechanism 2, the two wedge rings 18, 19 are arranged in tandem between the pressure plate 17 and the diaphragm spring 15 so that these wedge rings are disposed concentrically, however, with differences in length and diameter, relative to each other.

The wear adjustment mechanism 2 is configured so that, as the inner wedge ring 18 or the outer wedge ring 19 is rotated in one circumferential direction relative to the pressure plate 17, the length (the length in the axial direction) from the pressure plate 17 to the abutting portion between the diaphragm spring 15 and the inner wedge ring 18 or to the abutting portion between the diaphragm spring and the outer wedge ring 19 will be increased. In the wear adjustment mechanism 2, the pressure plate 17 includes a plurality of serrated sloped surface sections 17d on its surface abutting onto the inner wedge ring 18 and the outer wedge ring 19. Each serrated sloped surface section 17d has a slope such that transitioning along the slope in one of the circumferential directions produces transitioning in one of the axial directions at the same time. The inner wedge ring 18 is provided with a plurality of serrated sloped surface sections 18a configured for mating with the sloped surface sections 17d of the pressure plate 17. The outer wedge ring 19 is also provided with a plurality of serrated sloped surface sections 19a configured for mating with the sloped surface sections 17d. Length adjustment may be made by exploiting slidable engagement between the respective mating sloped surface sections. The wear adjustment mechanism 2 may be implemented using a system other than the system exploiting the slidable engagement between the mating sloped surface sections. For example, threaded-like engagement between the pressure plate 17 and the inner or outer wedge rings 18, 19 may be exploited in order to compel the inner or outer wedge rings 18, 19 to be rotated relative to the pressure plate 17 in one or the other circumferential direction to effect length adjustment. The wedge rings 18, 19 may be arcuate members obtained on circumferentially splitting corresponding blank ring materials or may also be linear members arranged for performing relative movements along tangential drawn to the circumferences.

In the wear adjustment mechanism 2, the inner wedge ring 18 is biased by an elastic member 20 in one circumferential direction relative to the pressure plate 17 so that, if a gap (play or clearance) between the diaphragm spring 15 and the inner wedge ring 18 is produced due to abrasive wear caused to the friction material 31 of the clutch disk 30, such gap will be filled (i.e., reduced or cancelled). In the wear adjustment mechanism 2, the outer wedge ring 19 is biased by an elastic member 21 in one circumferential direction relative to the pressure plate 17 so that a gap (play or clearance) produced between the diaphragm spring 15 and the outer wedge ring 19 due to abrasive wear caused to the friction material 31 of the clutch disk 30 will similarly be filled. The wear adjustment mechanism 2 is arranged so that the gap between the diaphragm spring 15 and the inner wedge ring 18 and that between the diaphragm spring 15 and the outer wedge ring 19 will be alternately filled based on the difference in diameter between the inner wedge ring 18 and the outer wedge ring 19 or on the swinging (or pivoting) movement of the diaphragm spring 15. Specifically, length adjustment is made in such a manner that filling the gap between the diaphragm spring 15 and the inner wedge ring 18 is followed by filling the gap between the diaphragm spring 15 and the outer wedge ring 19. It is noted that the wear adjustment mechanism 2 may be disposed not only in the vicinity of the pressure plate 17, as in the subject Example, but in such a manner as to adjust an axial location of fulcrum member(s) 16. The wear adjustment mechanism 2 may also be disposed in the vicinity of the release bearing 26 so as to follow changes in the relative distance between the release bearing 26 and the diaphragm spring 15.

The clutch apparatus 1 includes, as principal components, a flywheel 11, bolt(s) 12, a clutch cover 13, bolt(s) 14, the diaphragm spring 15, the fulcrum member(s) 16, the pressure plate 17, the inner wedge ring 18, the outer wedge ring 19, the elastic members 20, 21, a strap(s) 22, a rivet(s) 23, a tubular member 24, a sleeve 25, the release bearing 26 and the clutch disk 30.

The flywheel 11 is an annular inertia member (see Fig.1) securely fastened at its inner rim parts to the crankshaft 10 by a plurality of bolts 12 for rotation in unison with the crankshaft. The flywheel 11 is also securely fastened at its outer rim parts to the clutch cover 13 by a plurality of bolts 14 for rotation in unison with the clutch cover.

The clutch cover 13 is an annular member configured to cover an outer peripheral part of the clutch disk 30 (see Fig.1 and 3). The clutch cover 13 has its outer rim part securely fastened by bolt(s) 14 to the flywheel 11 for rotation in unison with the flywheel. The clutch cover 13 is spaced apart at its inner rim part from the flywheel so as to cover the outer peripheral part of the clutch disk 30 and the pressure plate 17. An extreme end of the inner rim of the clutch cover 13 carries two fulcrum members 16 disposed to clamp both sides of a halfway (middle) part of the diaphragm spring 15. The two fulcrum members 16 are caulked and staked by the clutch cover 13 in each of a plurality of voids between neighbored lever sections of the diaphragm spring 15. The clutch cover 13 swingably (pivotally) supports the diaphragm spring 15 about the fulcrum members 16 as center. The clutch cover 13 is elastically connected to the pressure plate 17 through the strap(s) 22 and performs rotation in unison with the pressure plate 17.

The diaphragm spring 15 is an elastic member comprised of an annular Belleville (conically shaped) spring part and a plurality of lever sections radially extending therefrom (see Fig.1, 3 and 4). At a radially halfway portion, the diaphragm spring 15 is pivotally mounted between the two fulcrum members 16 carried by the clutch cover 13. That is, the diaphragm spring 15 operates as a lever member with the fulcrum members 16 operating as pivot points. The diaphragm spring 15 has its engine side outer circumferential surface (on the right-hand side in Fig.1) abutted onto the inner wedge ring 18 and/or the outer wedge ring 19. The diaphragm spring 15 has its transmission side inner circumferential surface (on the left-hand side in Fig.1) abutted onto a rotating ring of the release bearing (unit) 26. The diaphragm spring 15 may be tilted about the fulcrum members 16 as fulcrum point, whereby its outer rim part biases the pressure plate 17 onto the flywheel 11 via the inner wedge ring 18 and/or the outer wedge ring 19, at the same time as its inner rim part biases the release bearing 26 towards the transmission (, that is, towards left in Fig.1). The diaphragm spring 15 biases the pressure plate 17 through the inner wedge ring 18 and/or the outer wedge ring 19, whereby the friction material 31 of the clutch disk 30 is brought into pressed contact with the flywheel 11. When the inner rim part of the diaphragm spring 15 is pushed by the release bearing 26 in the direction of the flywheel 11, the outer rim part thereof is displaced in a direction away from the flywheel 11 so as to release the pressure plate 17 from its state of biasing the flywheel 11.

The fulcrum members 16 are annular members operating as fulcrum for the pivoting (swinging) movement of the diaphragm spring 15 (see Fig.1). The fulcrum members 16 are disposed on both sides of the halfway portion of the diaphragm spring 15 and are caulked and staked in position by the clutch cover 13 at a plurality of voids between the neighbored lever sections of the diaphragm spring 15.

The pressure plate 17 is an annular one-piece plate configured to push the slidable friction part of the clutch disk 30 onto the flywheel 11 (see Figs.1 to 4). The pressure plate 17 has a surface directed to the engine, that is, a surface on the right-hand side of Fig.1, operating as a surface frictionally sliding against the friction material 31 of the clutch disk 30. The pressure plate 17 is biased by the diaphragm spring 15 towards the flywheel 11 via the inner wedge ring 18 or the outer wedge ring 19. The pressure plate 17 plays the role (i.e., acts as) of a base ring member for the inner wedge ring 18 or the outer wedge ring 19 in the wear adjustment mechanism 2. The pressure plate 17 includes a plurality of seat portions 17a at an end of its outer rim. Each of the seat portions 17a serves for connecting the strap 22 to the pressure plate 17 by rivet 23. The pressure plate 17 is elastically connected to the clutch cover 13 by the strap(s) 22, designed as a leaf spring, for rotation in unison with the clutch cover 13. The pressure plate 17 is biased by the strap(s) 22 away from the flywheel 11 in an axial direction with a force smaller than that exerted by the diaphragm spring 15.

The pressure plate 17 includes guide portions 17b, 17c extending towards the transmission, that is, towards the left-hand side of Fig.1. The guide parts are formed on a surface of the pressure plate directed towards the transmission (towards the left-hand side of Fig.1), that is, a back surface opposite to the friction surface of the pressure plate. The guide portion 17b is formed as a ring extending in a circumferential direction, while the guide portion 17c is also formed as a ring extending in the circumferential direction, provided that the guide portion 17c is disposed on a radially outer side of the guide portion 17b. The pressure plate 17 includes a groove which is formed for extending in the circumferential direction between the guide portions 17b, 17c and into which the inner wedge ring 18 and the outer wedge ring 19 are fitted in parallel (side by side). The guide portion 17b restricts the radial movement of the inner wedge ring 18, while the guide portion 17c restricts the radial movement of the outer wedge ring 19.

A plurality of the sloped surface sections 17d are formed on the bottom surface of the groove defined between the guide portions 17b, 17c. Each of the sloped surface sections 17d has a slope such that transitioning along the slope in one of the circumferential directions produces transitioning in one of the axial directions at the same time. Each sloped surface section 17d mates with the corresponding sloped surface sections 18a, 19a of the inner and outer wedge rings 18, 19. Specifically, the sloped surface sections 17d is slidably engaged with the sloped surface section 18a of the inner wedge ring 18 and with the sloped surface section 19a the outer wedge ring 19. Thus, if the inner wedge ring 18 or the outer wedge ring 19 rotates in one of the circumferential directions relative to the pressure plate 17, the inner wedge ring 18 or the outer wedge ring 19 may be displaced in a direction away from the pressure plate 17. To the pressure plate 17, there are swingably (pivotally) connected one ends of the elastic members 20, 21, respectively.

The inner wedge ring 18 is an annular member disposed more radially inwardly than the outer wedge ring 19 (see Fig.1, 3, 4). The inner wedge ring 18 is arranged between the pressure plate 17 and the diaphragm spring 15 and abuts onto and thrusts the diaphragm spring 15 at an operating point thereof so as to be subject to the force of the diaphragm spring 15 which biases the ring 18 towards the engine(, that is, towards right in Fig.1).

The inner wedge ring 18 includes a plurality of sloped surface sections 18a on a surface directed to the pressure plate 17. Each sloped surface section 18a has a slope such that transitioning along the slope in one of the circumferential directions produces transitioning in one of the axial directions at the same time. Each sloped surface section 18a mates with the corresponding sloped surface section 17d of the pressure plate 17. Specifically, the sloped surface section 18a is slidably engaged with the sloped surface section 17d of the pressure plate 17. Thus, if the inner wedge ring 18 rotates in one of the circumferential directions with respect to the pressure plate 17, the inner wedge ring may be displaced in a direction away from the pressure plate 17. The inner wedge ring 18 is swingably (pivotally) connected to the distal end of the elastic member 20 and is biased by the elastic member in one circumferential direction so as to fill a clearance (play) incidentally produced between the diaphragm spring 15 and the inner wedge ring 18.

The inner wedge ring 18 includes one or more lug(s) (stopper portion(s)) 18b protruded radially outwards from its outer circumferential surface. When the outer wedge ring 19 is displaced away from the pressure plate17, the lug(s) 18 abuts onto a recessed part(s) 19b of the outer wedge ring 19 so as to act as a stopper controlling the displacement of the outer wedge ring 19. A surface section of the lug(s) 18b, abutting onto the recessed part(s) 19b of the outer wedge ring 19, is formed as a sloped surface section 18c. The slope of the sloped surface section 18c is such that transitioning along the slope in one of the circumferential directions produces transitioning in one of the axial directions at the same time. Each sloped surface sections 18c is sloped in a reverse direction to the sloped surface section 18a and mates with a sloped surface section 19c of the outer wedge ring 19.

The outer wedge ring 19 is an annular member disposed radially outwardly of the inner wedge ring 18 (see Fig.1, 3, 4). The outer wedge ring 19 is arranged between the pressure plate 17 and the diaphragm spring 15 and acted on by the diaphragm spring 15 at its operating point so as to be biased by the diaphragm spring 15 towards the engine (towards the right-hand side of Fig.1).

The outer wedge ring 19 includes a plurality of sloped surface sections 19a on its surface directed to the pressure plate 17. The slope of the surface section 19a is such that transitioning in one of the circumferential directions produces transitioning in one of the axial directions at the same time. The surface section 19a mates with the sloped surface section 17d of the pressure plate 17. Specifically, the surface section 19a is slidably engaged with the mating sloped surface section 17d of the pressure plate 17, so that, when the outer wedge ring 19 is rotated in one of the circumferential directions relative to the pressure plate17, the outer wedge ring 19 may be displaced away from the pressure plate 17. The outer wedge ring 19 is swingably (pivotally) connected to the distal end of the elastic member 21 and is thereby biased in one circumferential direction so as to fill (i.e., reduce or cancel) a clearance (play) incidentally produced between the diaphragm spring 15 and the outer wedge ring 19.

The outer wedge ring 19 is provided on its inner circumferential surface with one or more recessed part(s) 19b which is open radially outwards. When the outer wedge ring 19 is displaced away from the pressure plate 17, the recessed part(s) is abutted onto the lug(s) 18b of the inner wedge ring 18 to restrict (control) the displacement of the outer wedge ring 19. A surface of the recessed part(s) 19b abutting onto the lug 18b of the inner wedge ring 18 is formed as a sloped surface section 19c. The slope of the surface section 19c is such that transitioning along the slope in one circumferential direction produces transitioning in the other axial direction at the same time. That is, the sloped surface section 19c is sloped in a reverse direction to the sloped surface section 19a and mates with the sloped surface section 18c of the inner wedge ring 18.

The elastic member 20 biases the inner wedge ring 18 in one of the circumferential directions relative to the pressure plate 17 (see Fig.4). The elastic member 20 may for example be a coil spring or a leaf spring having one end swingably connected to the pressure plate 17 and having the other end swingably linked to the inner wedge ring 18. Although the elastic member 20 is shown as a thrust spring in Fig.4, it may also be a traction spring which biases the inner wedge ring 18 in one of the circumferential directions relative to the pressure plate 17.

The elastic member 21 biases the outer wedge ring 19 in one of the circumferential directions, that is, in the same direction as that for the elastic member 20, with respect to the pressure plate 17 (see Fig.4). The elastic member 21 may for example be a coil spring or a leaf spring having one end swingably (pivotally) connected to the pressure plate 17 and having the other end swingably (pivotally) linked to the outer wedge ring 19. Although the elastic member 21 is shown as a thrust spring in Fig.4, it may also be a traction spring which biases the outer wedge ring 19 in one of the circumferential directions relative to the pressure plate 17.

The tubular member 24 is mounted on the outer periphery of the input shaft 41 of the transmission system, and is carried by a housing, not shown, of the transmission system (see Fig.1). An inner circumferential surface of the tubular member 24 is spaced apart from the input shaft 41 of the transmission system. The sleeve 25 is mounted axially slidably on an outer circumferential surface of the tubular member 24. The sleeve 25 is a tubular member to which is fastened a stationary ring of the release bearing 26 (see Fig.1). The sleeve 25 may be slid axially under the force of operation from a release mechanism such as a hydraulic or link mechanism. The release bearing 26, which herein is a ball bearing (unit), operates to push or thrust an inner rim of the rotating diaphragm spring 15 to disconnect the clutch apparatus (see Fig.1). The release bearing 26 is configured so that its rotating ring, abutting onto the diaphragm spring 15, is carried via a plurality of balls on the stationary ring. The release bearing 26 is slidable in unison with the sleeve 25.

The clutch disk 30 is a circular disk-shaped assembly disposed between the flywheel 11 and the pressure plate 17 (see Fig.1, 3). The clutch disk 30 includes, on its outer rim, a frictional sliding section comprised of the friction material 31 securely fastened by a rivet (s) 33 on both sides of a lining plate 32. It is at this frictional sliding section that the clutch disk 30 is clamped between the flywheel 11 and the pressure plate 17. The clutch disk is securely fastened by the rivets 33 to side plates 34, 35 at an inner rim part of the lining plate 32. A hub member 36 is disposed between the side plates 34, 35. The clutch disk has the function to buffer (absorb) the torsion (torque fluctuations) between the side plates 34, 35 and the hub member 36 based on the force of elasticity of an elastic member(s) 37. In the clutch disk 30, a thrust member 38 is disposed between the side plate 34 and the hub member 36, while a thrust member 39 and a Belleville spring 40 are disposed between the side plate 35 and the hub member 36. Thus, the clutch disk also has the function to buffer (absorb) the torsion (torque fluctuations) between the side plates 34, 35 and the hub member 36, based on the force of friction between the thrust members 38, 39 and the hub member 36. The clutch disk 30 is in splined engagement with the input shaft 41 of the transmission at an inner rim of the hub member 36 so that the clutch disk is axially movable but non-rotatable with respect to the input shaft 41. It is noted that the input shaft 41 is rotatably carried by the housing, not shown, of the transmission via a bearing, not shown, in order to transmit the power of rotation from the clutch disk 30 to the transmission, not shown.

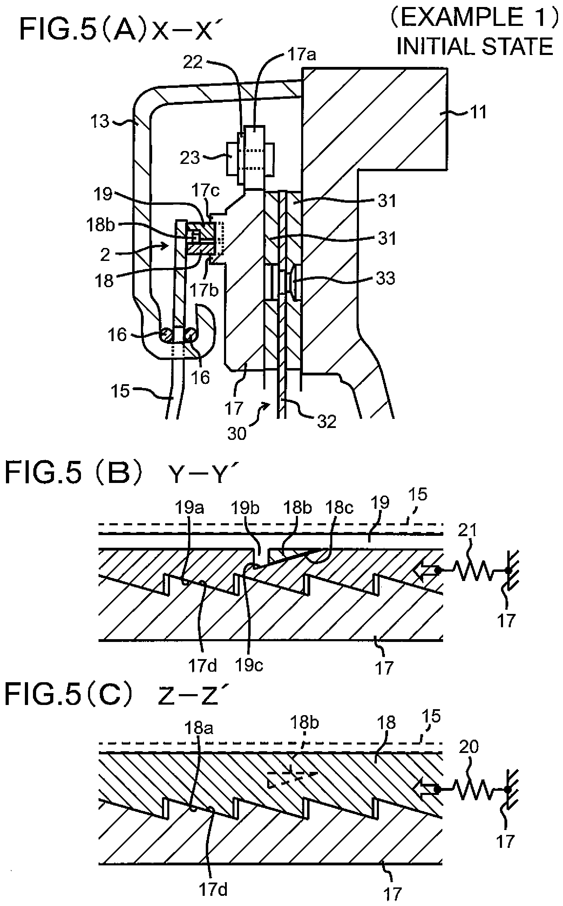

The operation of the clutch apparatus according to Example 1 of the present invention will now be described with reference to the drawings. Figs.5 to 9 illustrate the operation of the clutch apparatus according to Example 1 of the present invention. Fig.5(A) to Fig.9 (A) are axial partial cross-sectional views showing respective portions on line X-X' of Fig.2, Fig.5(B) to Fig.9(B) are circumferential partial cross-sectional views showing respective portions on line Y-Y' of Fig.3 and Fig.5(C) to Fig.9(C) are circumferential partial cross-sectional views showing respective portions on line Z-Z' of Fig.3.

### [Initial State]

Referring to Fig.5, when a clutch is engaged, in an as-assembled initial state, the friction material 31 of the clutch disc 30 is not worn by abrasion, there being no gap or clearance between the inner wedge ring 18/ outer wedge ring 19 and the diaphragm spring 15. In the wear adjustment mechanism 2, the inner wedge ring 18 and the outer wedge ring 19 are at closest portions to the pressure plate 17.

### [Friction material worn by abrasion]

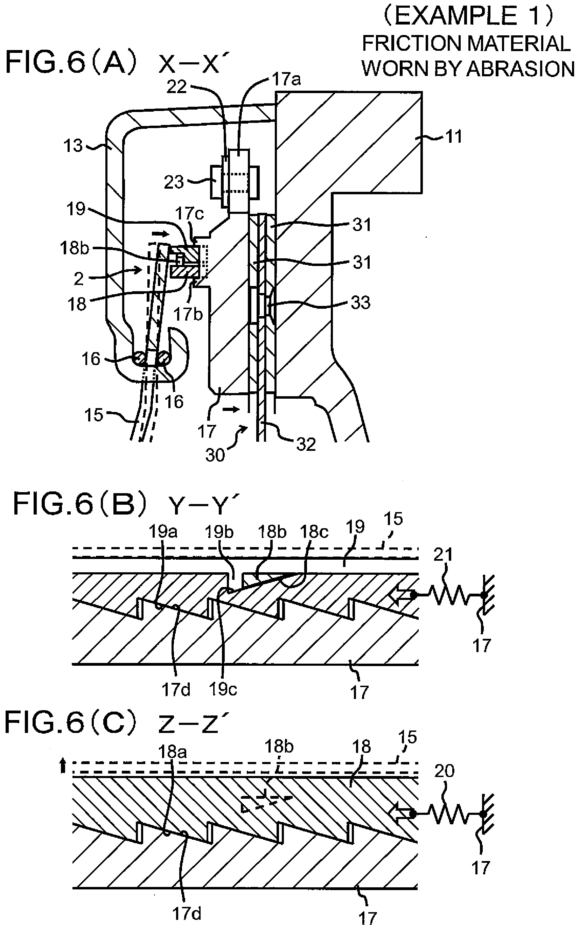

As the clutch apparatus is used as from its initial state, the friction material 31 is worn by abrasion and reduced in thickness, as shown in Fig.6. In the clutch engaged state, the pressure plate 17 is displaced towards the flywheel 11 under the force of thrust exerted by the diaphragm spring 15. The operating point(s) of the diaphragm spring 15 is shifted towards the flywheel 11 which is thus tilted at an acute angle. At the operating point(s) of the diaphragm spring 15, the diaphragm spring is in contact just with the outer wedge ring 19, such that there is formed a gap (clearance or play) between the diaphragm spring 15 and the inner wedge ring 18.

### [Inner wedge ring in operation]

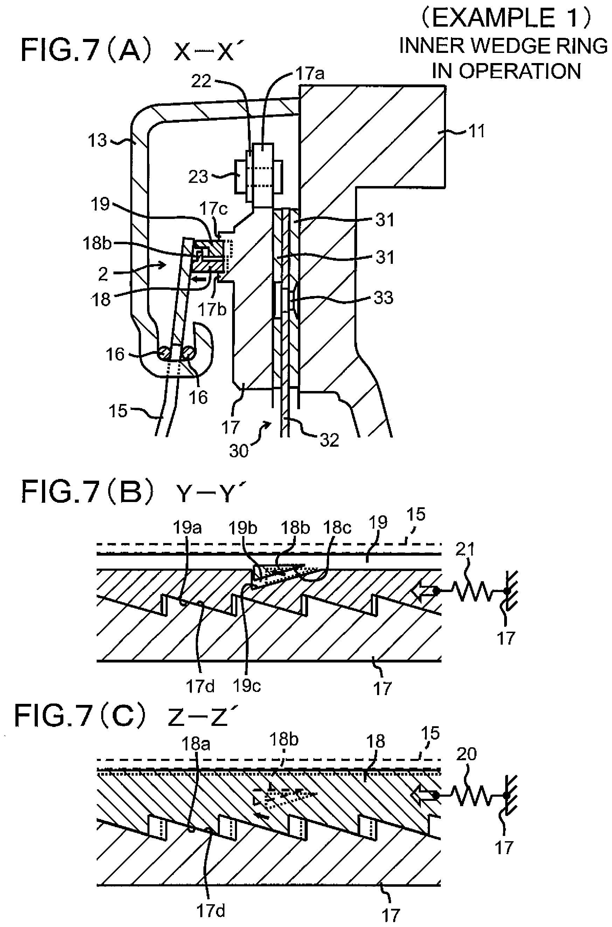

If, in the clutch engaged state, there is formed the gap between the diaphragm spring 15 and the inner wedge ring 18, the inner wedge ring is in a non-constrained state. At this time, the inner wedge ring 18 rotates in one of the circumferential directions, under the bias force of the elastic member 20, with respect to the pressure plate 17, as shown in Fig.7. The inner wedge ring 18 is thus moved in one of the axial directions, that is, in a direction away from the pressure plate 17, until the gap between the diaphragm spring 15 and the inner wedge ring 18 disappears. Both the inner wedge ring 18 and the outer wedge ring 19 are now in contact with the diaphragm spring 15 at its two operating points.

### [Clutch Disengage Operation]

If, in a state where the inner wedge ring 18 and the outer wedge ring 19 are both in contact with the diaphragm spring 15 at its operating points, the clutch apparatus is shifted from the clutch engaged position to the clutch disengaged position, the diaphragm spring 15 is displaced in a direction in which its operating point(s) becomes increasingly away from the flywheel 11, as shown in Fig.8. The diaphragm spring 15 becomes flat in profile at this time, such that it contacts at its operating point(s) just with the inner wedge ring 18. There is thus generated a gap (clearance or play) between the diaphragm spring 15 and the outer wedge ring 19.

### [Outer Wedge Ring in Operation]

If, in the clutch engaged state, there is formed the gap between the diaphragm spring 15 and the outer wedge ring 19, the outer wedge ring is in a non-constrained state. At this time, the outer wedge ring 19 rotates in one of the circumferential directions, under the bias force of the elastic member 21, with respect to the pressure plate 17, as shown in Fig.9. The outer wedge ring 19 is thus moved in one of the axial directions, that is, in a direction away from the pressure plate 17, until the gap between the diaphragm spring 15 and the outer wedge ring 19 disappears. Both the inner wedge ring 18 and the outer wedge ring 19 are now in contact with the diaphragm spring 15 at its operating points. As the case may be, during the time of the outer wedge ring operation, the lug(s) 18b of the inner wedge ring 18 (its sloped surface section 18c) may be abutted onto the recessed part(s) 19b of the outer wedge ring 19 (its sloped surface section 19c) before the gap between the diaphragm spring 15 and the outer wedge ring 19 disappears, such as to suppress excess displacement of the outer wedge ring 19.

The above mentioned sequence of operations of the abrasive wear to the friction material (see Fig.6), the inner wedge ring operation (see Fig.7), the clutch disconnect operation (see Fig.8) and the outer wedge ring operation (see Fig.9), is made to take place in reiteratively. The inner wedge ring 18 and the outer wedge ring 19 may thus be displaced, in an amount equal to the amount of abrasive wear to the friction material 31 of the clutch disk 30, such as to fill (or cancel) the gap between the inner wedge ring 18/ outer wedge ring 19 and the diaphragm spring 15. Hence, the diaphragm spring 15 is able to maintain the same posture (i.e., function) even after wear as same as that before wear to the friction material 31.

According to Example 1, length adjustment of the operating point(s) of the diaphragm spring 15 is made based on movement of the inner wedge ring 18 or the outer wedge ring 19 in the circumferential directions with respect to the pressure plate 17. It is thus possible to eliminate malfunctions ascribable to the centrifugal force.

Moreover, in Example 1, the length adjustment of the operating point(s) of the diaphragm spring 15 is made by restricting (controlling) the displacement of the outer wedge ring 19 by the lug(s) 18b of the inner wedge ring 18 and the recessed part(s) 19b of the outer wedge ring 19. By so doing, correct length adjustment may be made in an amount corresponding to the wear caused to the friction material 31. In addition, since the contact surfaces of the lug(s) 18b and the recessed part(s) 19b of the outer wedge ring 19 are the sloped surface sections 18c, 19c, respectively, it is possible to prevent adjustment failure due to rioting (out-of-control) operations of the outer wedge ring 19 in case of occurrence of oscillations acting in the axial direction.

Furthermore, in Example 1, the sloped surface sections 18a, 19a, 17d are provided on the abutting surfaces of the inner wedge ring 18, outer wedge ring 19 and the pressure plate 17, respectively, such as to make length adjustment for the operating point(s) of the diaphragm spring 15. There is thus no necessity to provide an additional member or members between the inner wedge ring 18/ outer wedge ring 19 and the pressure plate 17. Hence, the axial dimension of the clutch cover 13 as well as the number of components may be decreased to reduce the cost.

Also, in Example 1, in which the inner wedge ring 18 is partially extended radially outwards in the form of the lug(s) 18b, the lug(s) 18(b) can be made to contact with the recessed part(s) 19b of the outer wedge ring 19 at a radial position equivalent to that at which the outer wedge ring 19 is in contact with the diaphragm spring 15. It is thus possible to reduce the difference between the radial position at which the outer wedge ring 19 is in contact with the diaphragm spring 15 and that at which the inner wedge ring 18 is in contact with the diaphragm spring 15. As a result, changes between the distance from the fulcrum point to one of the operating points of the diaphragm spring 15 and that from the fulcrum point to the other operating point may be reduced. Hence, it is possible to reduce changes between the release characteristic when the outer wedge ring 19 is in contact with the diaphragm spring 15 and that when the inner wedge ring 18 is in contact with the diaphragm spring 15.

### Example 2

A clutch apparatus according to Example 2 which is not according to the invention, will now be explained with reference to the drawings. Fig.10 is an axial partial cross-sectional view schematically showing a formulation of a clutch apparatus according to Example 2 and also showing its wear adjustment mechanism with its vicinity to an enlarged scale. Fig.11(A) and Fig.11(B) schematically illustrate the formulation of the clutch apparatus according to Example 2, where Fig.11(A) is a circumferential partial cross-sectional view showing a portion of the apparatus along line Y-Y' of Fig.10 and Fig.11(B) is a circumferential partial cross-sectional view showing its another portion along line Z-Z' of Fig.10.

Example 2 is a modification of Example 1. That is, the lug (18b of Fig.3) of the inner wedge ring 18 is not provided and, in its stead, a pin(s) (stopper portion(s)) 18d is used. Moreover, the elastic member (20 of Fig.4) between the pressure plate 17 and the inner wedge ring 18 is not provided and, in its stead, an elastic member 28 is provided between the inner wedge ring 18, more specifically the pin(s) 18d, and the outer wedge ring 19.

The inner wedge ring 18 includes one or more pins (18d) projected radially outwardly from its outer circumferential surface. When the outer wedge ring 19 is displaced away from the pressure plate 17, the pin(s) (18d) abuts onto a recessed part(s) 19d of the outer wedge ring 19 to restrict (control) displacement of the outer wedge ring 19, with the pin(s) thus acting as a stopper(s) which restricts the displacement of the outer wedge ring 19. The inner wedge ring 18 has the elastic member 28 whose distal end is pivotally connected to the pin 18d and hence is biased by the elastic member 28 in one of the circumferential directions so as to fill (cancel) a gap (clearance or end play) incidentally produced between the diaphragm spring 15 and the inner wedge ring 18. In other respects, the inner wedge ring 18 is configured analogously to the inner wedge ring of Example 1 (18 of Fig.1, 3, 4).

The outer wedge ring 19 includes one or more of the recessed part(s) 19d recessed in the axial direction from its abutting surface onto the diaphragm spring 15. When the outer wedge ring 19 is displaced away from the pressure plate 17, the recessed part(s) 19d is abutted onto the pin(s) 18d of the inner wedge ring 18 so as to restrict (control) the displacement of the outer wedge ring 19. The outer wedge ring 19 is pivotally linked to the distal end of an elastic member 27 and thereby biased in one of the circumferential directions so as to fill (cancel) a gap (clearance or play) incidentally produced between the diaphragm spring 15 and the outer wedge ring 19. In other respects, the outer wedge ring 19 is configured analogously to the outer wedge ring of Example 1 (19 of Fig.1, 3, 4).

The elastic member 27 biases the outer wedge ring 19 in one of the circumferential directions relative to the pressure plate 17. The elastic member 27, which may for example be a coil spring or a leaf spring, has its one end pivotally linked to the pressure plate 17, while having its other end pivotally linked to the outer wedge ring 19. The biasing force of the elastic member 27 is set greater than that of the elastic member 28. It is noted that, while the elastic member 27 is shown in Fig.11 as a thrust spring, it may also be designed as a traction spring which biases the outer wedge ring 19 in one of the circumferential directions with respect to the pressure plate 17.

The elastic member 28 is a member that biases the inner wedge ring 18 in one of the circumferential directions relative to the outer wedge ring 19. The elastic member 28, which may for example be a coil spring or a leaf spring, has its one end pivotally linked to the outer wedge ring 19, while having its other end pivotally linked to the pin(s) 18d of the inner wedge ring 18. The biasing force of the elastic member 28 is set smaller than that of the elastic member 27. It is noted that, while the elastic member 28 is shown in Fig.11 as a thrust spring, it may also be designed as a traction spring which biases the inner wedge ring 18 in one of the circumferential directions with respect to the outer wedge ring 19.

In other respects, the formulation of the clutch apparatus according to Example 2 is similar to that of Example 1.

The operation of the clutch apparatus according to Example 2 of the present invention will now be described with reference to the drawings. Figs. 12 to 16 illustrate the operation of the clutch apparatus according to Example 2 of the present invention. Fig.12(A) to Fig.16(A) are axial partial cross-sectional views, Fig.12(B) to Fig.16(B) are circumferential partial cross-sectional views showing respective portions on a line Y-Y' of Fig.10 and Fig.12(C) to Fig.16(C) are circumferential partial cross-sectional views showing respective portions on a line Z-Z' of Fig.10.

### [Initial State]

Referring to Fig.12, when a clutch is engaged, in an as-assembled initial state, the friction material 31 of the clutch disc 30 is not worn by abrasion, there being no gap or clearance between the inner wedge ring 18/ outer wedge ring 19 and the diaphragm spring 15. In the wear adjustment mechanism 2, the inner wedge ring 18 and the outer wedge ring 19 are at closest positions to the pressure plate 17.

### [Friction Material Worn by Abrasion]

As the clutch apparatus is used as from its initial state, the friction material 31 of the clutch disc 30 is worn by abrasion and reduced in thickness, as shown in Fig.13. In a clutch engaged state, the pressure plate 17 is displaced towards the flywheel 11 under the thrust force exerted by the diaphragm spring 15. The operating point(s) of the diaphragm spring 15 is shifted towards the flywheel 11 so that the diaphragm spring 15 is tilted at an acute angle. At the operating point(s) of the diaphragm spring 15, the diaphragm spring is in contact just with the outer wedge ring 19, such that there is formed a gap (clearance or play) between the diaphragm spring 15 and the inner wedge ring 18.

### [Inner Wedge Ring in Operation]

If, in the clutch engaged state, there is formed the gap between the diaphragm spring 15 and the inner wedge ring 18, the inner wedge ring is in a non-constrained state. At this time, the inner wedge ring 18 is rotated in one of the circumferential directions, under the bias force of the elastic member 28, with respect to the outer wedge ring 19, as shown in Fig.14. The inner wedge ring 18 is thus moved in one of the axial directions, that is, in a direction away from the pressure plate 17, until the gap between the diaphragm spring 15 and the inner wedge ring 18 disappears. Both the inner wedge ring 18 and the outer wedge ring 19 are now in contact with the diaphragm spring 15 at its two operating points.

### [Clutch Disengage Operation]

In the state where the inner wedge ring 18 and the outer wedge ring 19 are both in contact with the diaphragm spring 15 at its operating points, when the clutch apparatus is shifted from the clutch engaged position to the clutch disengaged position, the diaphragm spring 15 is displaced to a position in which its operating points become detached from the flywheel 11, as shown in Fig.15. The diaphragm spring 15 becomes flat in profile at this time, such that it contacts at its operating point(s) just with the inner wedge ring 18. There is thus generated a gap (clearance or play) between the diaphragm spring 15 and the outer wedge ring 19.

### [Outer Wedge Ring in Operation]

If, in the clutch engaged state, there is formed the gap between the diaphragm spring 15 and the outer wedge ring 19, the inner wedge ring is in a non-constrained state. At this time, the outer wedge ring 19 is rotated in one of the circumferential directions, under the bias force of the elastic member 28, relative to the pressure plate 17, as shown in Fig.16. The outer wedge ring 19 is thus displaced in one of the axial directions, that is, in a direction away from the pressure plate 17, until the gap between the diaphragm spring 15 and the outer wedge ring 19 disappears. Both the inner wedge ring 18 and the outer wedge ring 19 are now in contact with the diaphragm spring 15 at its operating points. It is noted that, when the outer wedge ring 19 rotates in one of the circumferential directions relative to the pressure plate 17 under the bias fore of the elastic member 28, the elastic member 27 operates counteractively. However, since the biasing force of the elastic member 28 is greater than that of the elastic member 27, the outer wedge ring 19 is able to rotate in one of the circumferential directions relative to the pressure plate 17. As the case may be, the pin(s) 18d of the inner wedge ring 18 may be abutted onto the recessed part(s) 19d of the outer wedge ring 19 before the gap between the diaphragm spring 15 and the outer wedge ring 19 disappears in the course of the outer wedge ring operation, such as to suppress excess displacement of the outer wedge ring 19.

The above mentioned sequence of operations of the abrasive wear to the friction material (see Fig.13), the inner wedge ring operation (see Fig.14), the clutch disengage operation (see Fig.15) and the outer wedge ring operation (see Fig.16), is made to take place reiteratively. The inner wedge ring 18 and the outer wedge ring 19 may thus be displaced, in an amount equal to the amount of abrasive wear to the friction material 31 of the clutch disk 30, in order to fill (cancel) the gap between the inner wedge ring 18/ outer wedge ring 19 and the diaphragm spring 15. Hence, the diaphragm spring 15 is able to maintain the same posture (i.e., function) even after wear as that before wear to the friction material 31.

Example 2 may yield advantageous effects similar to those derived from Example 1.

### [Explanation of Symbols]

- 1: clutch apparatus
- 2: wear adjustment mechanism
- 10: crankshaft
- 11: flywheel
- 12: bolt(s)
- 13: clutch cover
- 14: bolt(s)
- 15: diaphragm spring (lever member)
- 16: fulcrum member(s)
- 17: pressure plate (third adjustment member)
- 17a: seat portion(s)
- 17b, 17c: guide portion(s)
- 17d: sloped surface section(s)
- 18: inner wedge ring (first adjustment member)
- 18a: sloped surface section(s)
- 18b: lug(s) (stopper portion(s))
- 18c: sloped surface section(s)
- 18d: pin(s) (stopper portion(s))
- 19: outer wedge ring (second adjustment member)
- 19a: sloped surface section(s)
- 19b: recessed part(s)
- 19c: sloped surface section(s)
- 19d: recessed part(s)
- 20: elastic member (first elastic member)
- 21: elastic member (second elastic member)
- 22: strap(s)
- 23: rivet(s)
- 24: tubular member
- 25: sleeve
- 26: release bearing
- 27: elastic member (second elastic member)
- 28: elastic member (first elastic member)
- 30: clutch disk
- 31: friction material
- 32: lining plate
- 33: rivet(s)
- 34, 35: side plates
- 36: hub member
- 37: elastic member
- 38, 39: thrust members
- 40: Belleville spring
- 41: input shaft of transmission

## Claims

1. A clutch apparatus including a wear adjustment mechanism (2);
the wear adjustment mechanism (2) comprising:
a first adjustment member (18) that is adapted to receive an operative force of a lever member (15) pivotally supported by a clutch cover (13);
a second adjustment member (19), disposed more radially outwardly than the first adjustment member (18), that is adapted to receive the operative force of the lever member (15); and
a third adjustment member (17), that is adapted to receive the operative force of the lever member (15) via the first adjustment member (18) or the second adjustment member (19); wherein,
the first adjustment member (18) or the second adjustment member (19) are adapted to perform a relative movement in one of the circumferential directions relative to the third adjustment member (17) in such a manner as to adjust a length from the third adjustment member (17) to an abutting portion between the lever member (15) and the first adjustment member (18), or a length from the third adjustment member (17) to an abutment portion between the lever member (15) and the second adjustment member (19);
the second adjustment member (19) has a recessed part (19b; 19d);
the first adjustment member (18) includes a stopper portion (18b; 18d) protruded radially outwards so as to be intruded into the recessed part (19b; 19d);
the stopper portion (18b; 18d) when abutted onto the recessed part (19b; 19d) restricts rotation of the second adjustment member (19) relative to the first adjustment member (18); and
the stopper portion (18b; 18d) protrudes radially outwards from an outer circumferential surface, **characterised in that**
the recessed part (19b) and the stopper portion (18b) include a sloped surface section (18c, 19c), respectively, on an abutting surface abutting against each other at the time of the restricting; each sloped surface section (18c, 19c) having a slope such that displacement along the slope in one of the circumferential directions produces a displacement in one of the axial directions at the same time.

2. The clutch apparatus according to claim 1, wherein,
the third adjustment member (17) is a pressure plate that is adapted to thrust a clutch disk (30) onto a flywheel (11).

3. The clutch apparatus according to claim 1 or 2, wherein,
the lever member (15) is a diaphragm spring that can bias the third adjustment member (17) via the first adjustment member (18) or the second adjustment member (19) in an axial direction.

4. The clutch apparatus according to any one of claims 1 to 3, wherein,
the wear adjustment mechanism (2) exploits engagement between a sloped surface section (18a, 19a) on an abutting surface of the first or second adjustment member (18, 19) and a sloped surface section (17d) on an abutting surface of the third adjustment member (17) mating with the abutting surface of the first or second adjustment member (18, 19); the engagement being such one in which displacement along a slope of one of the sloped surface sections in one of the circumferential directions produces displacement of the other sloped surface section in one of the axial directions at the same time.

5. The clutch apparatus according to any one of claims 1 to 3, wherein,
the wear adjustment mechanism (2) exploits thread-like engagement between the abutting surface of the first or second adjustment member (18, 19) and the abutting surface of the third adjustment member (17).

6. The clutch apparatus according to any one of claims 1 to 5, wherein,
the wear adjustment mechanism (2) further comprises:
a first elastic member (20) that is adapted to bias the first adjustment member (18) in one of the circumferential directions relative to the third adjustment member (17); and
a second elastic member (21) that biases the second adjustment member (19) in one of the circumferential directions relative to the third adjustment member (17).

7. The clutch apparatus according to any one of claims 1 to 5, wherein,
the wear adjustment mechanism (2) further comprises:
a first elastic member (28) that is adapted to bias the first adjustment member (18) in one of the circumferential directions relative to the second adjustment member (19); and
a second elastic member (27) that is adapted to bias the second adjustment member (19) in one of the circumferential directions relative to the third adjustment member (17);
a biasing force of the first elastic member (28) being smaller than a biasing force of the second elastic member (27).

8. The clutch apparatus according to any one of claims 1 to 7, wherein,
the wear adjustment mechanism (2) operates so that
if, in a clutch engaged state, the second adjustment member (19) is abutted onto the lever member (15), and a gap is produced between the first adjustment member (18) and the lever member (15), the first adjustment member (18) is rotated in one of the circumferential directions relative to the third adjustment member (17) so that the first adjustment member (18) is abutted onto the lever member (15); and
if, in a clutch disengaged state, the first adjustment member (18) is abutted onto the lever member (15), and a gap is produced between the second adjustment member (19) and the lever member (15), the second adjustment member (19) is rotated in one of the circumferential directions relative to the third adjustment member (17) so that the second adjustment member (19) is abutted onto the lever member (15).

## Patentansprüche

1. Kupplungsvorrichtung mit einem Abnutzungsanpassungsmechanismus (2);
welcher Abnutzungsanpassungsmechanismus (2) aufweist:
ein erstes Anpassungsbauteil (18), das dazu angepasst ist, eine operative Kraft eines Hebelbauteils (15), das durch einen Kupplungsdeckel (13) schwenkbar abgestützt wird, aufzunehmen;
ein zweites Anpassungsbauteil (19), das weiter radial auswärts angeordnet ist als das erste Anpassungsbauteil (18), das dazu angepasst ist, die operative Kraft des Hebelbauteils (15) aufzunehmen; und
ein drittes Anpassungsbauteil (17), das dazu angepasst ist, die operative Kraft des Hebelbauteils (15) über das erste Anpassungsbauteil (18) oder das zweite Anpassungsbauteil (19) aufzunehmen; bei der
das erste Anpassungsbauteil (18) oder das zweite Anpassungsbauteil (19) dazu angepasst sind, eine Relativbewegung in einer der Umfangsrichtungen relativ zu dem dritten Anpassungsbauteil (17) in einer derartigen Weise durchzuführen, dass sie eine Länge von dem dritten Anpassungsbauteil (17) zu einem Anlageabschnitt zwischen dem Hebelbauteil (15) und dem ersten Anpassungsbauteil (18) oder eine Länge von dem dritten Anpassungsbauteil (17) zu einem Anlageabschnitt zwischen dem Hebelbauteil (15) und dem zweiten Anpassungsbauteil (19) anpassen;
das zweite Anpassungsbauteil (19) einen ausgesparten Teil (19b; 19d) aufweist;
das erste Anpassungsbauteil (18) einen Anschlagabschnitt (18b; 18d) aufweist, der radial nach außen vorsteht, so dass er in den ausgesparten Teil (19b; 19d) eindringt;
der Anschlagabschnitt (18b; 18d), wenn er auf dem ausgesparten Teil (19b; 19d) anliegt, eine Drehung des zweiten Anpassungsbauteils (19) relativ zu dem ersten Anpassungsbauteil (18) begrenzt; und
der Anschlagabschnitt (18b; 18d) von einer Außenumfangsoberfläche radial nach außen vorsteht, **dadurch gekennzeichnet, dass**
der ausgesparte Abschnitt (19b) und der Anschlagabschnitt (18b) respektive einen geneigten Oberflächenabschnitt (18c, 19c) auf einer Anlageoberfläche aufweisen, die zu der Zeit des Begrenzens aneinander anliegen; jeder geneigte Oberflächenabschnitt (18c, 19c) eine Neigung aufweist, so dass ein Versatz entlang der Neigung in einer der Umfangsrichtungen zu derselben Zeit einen Versatz in einer der axialen Richtungen erzeugt.

2. Kupplungsvorrichtung nach Anspruch 1, bei der
das dritte Anpassungsbauteil (17) eine Druckplatte ist, die dazu angepasst ist, eine Kupplungsscheibe (30) auf ein Schwungrad (11) zu drängen.

3. Kupplungsvorrichtung nach Anspruch 1 oder 2, bei der
das Hebelbauteil (15) eine Membranfeder ist, die das dritte Anpassungsbauteil (17) über das erste Anpassungsbauteil (18) oder das zweite Anpassungsbauteil (19) in einer axialen Richtung vorspannen kann.

4. Kupplungsvorrichtung nach einem der Ansprüche 1 bis 3, bei der
der Abnutzungsanpassungsmechanismus (2) einen Eingriff zwischen einem geneigten Oberflächenabschnitt (18a, 19a) auf einer Anlageoberfläche des ersten oder zweiten Anpassungsbauteils (18, 19) und einem geneigten Oberflächenabschnitt (17d) auf einer Anlageoberfläche des dritten Anpassungsbauteils (17), die mit der Anlageoberfläche des ersten oder zweiten Anpassungsbauteils (18, 19) zusammengefügt ist, ausnutzt; welcher Eingriff ein derartiger ist, bei dem ein Versatz entlang einer Neigung eines der geneigten Oberflächenabschnitte in einer der Umfangsrichtungen zu derselben Zeit einen Versatz des anderen geneigten Oberflächenabschnitts in einer der axialen Richtungen erzeugt.

5. Kupplungsvorrichtung nach einem der Ansprüche 1 bis 3, bei der
der Abnutzungsanpassungsmechanismus (2) einen gewindeartigen Eingriff zwischen der Anlageoberfläche des ersten oder zweiten Anpassungsbauteils (18, 19) und der Anlageoberfläche des dritten Anpassungsbauteils (17) ausnutzt.

6. Kupplungsvorrichtung nach einem der Ansprüche 1 bis 5, bei der
der Abnutzungsanpassungsmechanismus (2) ferner aufweist:
ein erstes elastisches Bauteil (20), das dazu angepasst ist, das erste Anpassungsbauteil (18) in einer der Umfangsrichtungen relativ zu dem dritten Anpassungsbauteil (17) vorzuspannen; und
ein zweites elastisches Bauteil (21), das das zweite Anpassungsbauteil (19) in einer der Umfangsrichtungen relativ zu dem dritten Anpassungsbauteil (17) vorspannt.

7. Kupplungsvorrichtung nach einem der Ansprüche 1 bis 5, bei der der Abnutzungsanpassungsmechanismus (2) ferner aufweist:
ein erstes elastisches Bauteil (28), das dazu angepasst ist, das erste Anpassungsbauteil (18) in einer der Umfangsrichtungen relativ zu dem zweiten Anpassungsbauteil (19) vorzuspannen; und
ein zweites elastisches Bauteil (27), das dazu angepasst ist, das zweite Anpassungsbauteil (19) in einer der Umfangsrichtungen relativ zu dem dritten Anpassungsbauteil (17) vorzuspannen;
bei der eine Vorspannkraft des ersten elastischen Bauteils (28) kleiner als eine Vorspannkraft des zweiten elastischen Bauteils (27) ist.

8. Kupplungsvorrichtung nach einem der Ansprüche 1 bis 7, bei der der Abnutzungsanpassungsmechanismus (2) so arbeitet, dass,
falls in einem Kupplungseingriffszustand das zweite Anpassungsbauteil (19) auf dem Hebelbauteil (15) anliegt und eine Lücke zwischen dem ersten Anpassungsbauteil (18) und dem Hebelbauteil (15) erzeugt wird, das erste Anpassungsbauteil (18) in einer der Umfangsrichtungen relativ zu dem dritten Anpassungsbauteil (17) gedreht wird, so dass das erste Anpassungsbauteil (18) auf dem Hebelbauteil (15) anliegt; und
falls in einem Kupplungsausrückzustand das erste Anpassungsbauteil (18) auf dem Hebelbauteil (15) anliegt und eine Lücke zwischen dem zweiten Anpassungsbauteil (19) und dem Hebelbauteil (15) erzeugt wird, das zweite Anpassungsbauteil (19) in einer der Umfangsrichtungen relativ zu dem dritten Anpassungsbauteil (17) gedreht wird, so dass das zweite Anpassungsbauteil (19) auf dem Hebelbauteil (15) anliegt.

## Revendications

1. Dispositif d'embrayage comprenant un mécanisme de réglage d'usure (2) ;
le mécanisme de réglage d'usure (2) comprenant :
un premier élément de réglage (18) qui est adapté pour recevoir une force de commande d'un élément de levier (15) supporté de manière pivotante par un couvercle d'embrayage (13) ;
un deuxième élément de réglage (19), disposé plus radialement vers l'extérieur que le premier élément de réglage (18), adapté pour recevoir la force de commande de l'élément de levier (15) ; et
un troisième élément de réglage (17), adapté pour recevoir la force de commande de l'élément de levier (15) via le premier élément de réglage (18) ou le deuxième élément de réglage (19) ; où,
le premier élément de réglage (18) ou le deuxième élément de réglage (19) sont adaptés pour effectuer un mouvement relatif dans l'une des directions circonférentielles par rapport au troisième élément de réglage (17) de manière à régler une longueur depuis le troisième élément de réglage (17) vers une partie de butée entre l'élément de levier (15) et le premier élément de réglage (18), ou une longueur allant du troisième élément de réglage (17) à une partie de butée entre l'élément de levier (15) et le deuxième élément de réglage (19) ;
le deuxième élément de réglage (19) comporte une partie en retrait (19b ; 19d) ;
le premier élément de réglage (18) comprend une partie d'arrêt (18b; 18d) faisant saillie radialement vers l'extérieur de manière à pénétrer dans la partie en retrait (19b; 19d);
la partie d'arrêt (18b ; 18d) lorsqu'elle est en butée sur la partie en retrait (19b ; 19d) limite la rotation du deuxième élément de réglage (19) par rapport au premier élément de réglage (18) ; et
la partie d'arrêt (18b; 18d) fait saillie radialement vers l'extérieur depuis une surface circonférentielle externe, **caractérisé en ce que**
la partie en retrait (19b) et la partie d'arrêt (18b) comprennent une section de surface inclinée (18c, 19c), respectivement, sur une surface de butée en butée les unes contre les autres au moment de la restriction ; chaque section de surface inclinée (18c, 19c) ayant une pente telle que le déplacement le long de la pente dans l'une des directions circonférentielles provoque un déplacement simultané dans l'une des directions axiales.

2. Dispositif d'embrayage selon la revendication 1, dans lequel,
le troisième élément de réglage (17) est un plateau de pression qui est adapté pour pousser un disque d'embrayage (30) sur un volant d'inertie (11).

3. Dispositif d'embrayage selon la revendication 1 ou 2, dans lequel,
l'élément de levier (15) est un ressort à diaphragme qui peut solliciter le troisième élément de réglage (17) via le premier élément de réglage (18) ou le deuxième élément de réglage (19) dans une direction axiale.

4. Dispositif d'embrayage selon l'une quelconque des revendications 1 à 3, dans lequel,
le mécanisme de réglage d'usure (2) exploite l'engagement entre une section de surface inclinée (18a, 19a) sur une surface de butée du premier ou du deuxième élément de réglage (18, 19) et une section de surface inclinée (17d) sur une surface de butée du troisième élément de réglage (17) s'accouplant à la surface de butée du premier ou du deuxième élément de réglage (18, 19); l'engagement étant tel que le déplacement le long d'une pente de l'une des sections de surface inclinée dans l'une des directions circonférentielles provoque le déplacement simultané de l'autre section de surface inclinée dans l'une des directions axiales.

5. Dispositif d'embrayage selon l'une quelconque des revendications 1 à 3, dans lequel,
le mécanisme de réglage d'usure (2) exploite un engagement en forme de filetage entre la surface de butée du premier ou du deuxième élément de réglage (18, 19) et la surface de butée du troisième élément de réglage (17).

6. Dispositif d'embrayage selon l'une quelconque des revendications 1 à 5, dans lequel,
le mécanisme de réglage d'usure (2) comprend en outre :
un premier élément élastique (20) qui est adapté pour solliciter le premier élément de réglage (18) dans l'une des directions circonférentielles par rapport au troisième élément de réglage (17) ; et
un deuxième élément élastique (21) qui sollicite le deuxième élément de réglage (19) dans l'une des directions circonférentielles par rapport au troisième élément de réglage (17).

7. Dispositif d'embrayage selon l'une quelconque des revendications 1 à 5, dans lequel,
le mécanisme de réglage d'usure (2) comprend en outre :
un premier élément élastique (28) qui est adapté pour solliciter le premier élément de réglage (18) dans l'une des directions circonférentielles par rapport au deuxième élément de réglage (19) ; et
un deuxième élément élastique (27) qui est adapté pour solliciter le deuxième élément de réglage (19) dans l'une des directions circonférentielles par rapport au troisième élément de réglage (17) ;
une force de sollicitation du premier élément élastique (28) étant inférieure à une force de sollicitation du deuxième élément élastique (27).

8. Dispositif d'embrayage selon l'une quelconque des revendications 1 à 7, dans lequel,
le mécanisme de réglage d'usure (2) fonctionne de manière à ce que
si, dans un état d'embrayage engagé, le deuxième élément de réglage (19) vient en butée contre l'élément de levier (15), et un espace est créé entre le premier élément de réglage (18) et l'élément de levier (15), le premier élément de réglage (18) est entraîné en rotation dans l'une des directions circonférentielles par rapport au troisième élément de réglage (17), de sorte que le premier élément de réglage (18) est en butée contre l'élément de levier (15) ; et
si, dans un état d'embrayage désengagé, le premier élément de réglage (18) est en butée contre l'élément de levier (15) et un espace est créé entre le deuxième élément de réglage (19) et l'élément de levier (15), le deuxième élément de réglage (19) est entraîné en rotation dans l'une des directions circonférentielles par rapport au troisième élément de réglage (17), de sorte que le deuxième élément de réglage (19) est en butée contre l'élément de levier (15).
